# EUROPÄISCHE PATENTSCHRIFT

(11) **EP 1 516 024 B1**
(45) Veröffentlichungstag und Bekanntmachung des Hinweises auf die Patenterteilung: **13.08.2008**
(21) Anmeldenummer: 03759813.3
(22) Anmeldetag: 05.05.2003
(51) Int. Cl.: C09D 175/04, C09D 7/12, C08J 7/04, B60S 1/38

(54) **WISCHBLATT F R SCHEIBENWISCHER UND VERFAHREN ZUR HERSTELLUNG DESSELBEN**
WIPER BLADE FOR WINDSCREEN WIPER AND METHOD FOR PRODUCING THE SAME
RACLETTE D'ESSUIE-GLACE ET SON PROCEDE DE PRODUCTION

(30) Priorität: 14.06.2002 DE 10226752
(43) Veröffentlichungstag der Anmeldung: 23.03.2005
(73) Patentinhaber: ROBERT BOSCH GMBH, 70442 Stuttgart (DE)
(72) Erfinder: WILMS, Christian, B-3582 Beringen (Koersel) (BE); GRUHN, Herbert, 71638 Ludwigsburg (DE); HASENKOX, Ulrich, 71254 Ditzingen (DE); SCHMID, Hellmut, 74343 Sachsenheim (DE)
(86) Internationale Anmeldenummer: PCT/DE2003/001423
(87) Internationale Veröffentlichungsnummer: WO 2003/106575

(56) Entgegenhaltungen:
- WO-A-02/081582
- DE-A- 3 400 852
- DE-A- 19 612 231
- JP-A- 8 048 800

## Beschreibung

Die Erfindung betrifft ein Wischblatt insbesondere für Scheibenwischer sowie Verfahren zu dessen Herstellung nach dem Oberbegriff der unabhängigen Ansprüche.

### Stand der Technik

Bei Scheibenwischblättern ist es wichtig, dass sie sich der Kontur der Scheibe eines Kraftfahrzeugs möglichst gut anpassen können und auch bei unterschiedlichen Temperaturen flexibel bleiben. Daher werden Wischblätter in der Regel aus Elastomerprofilen gefertigt, wobei im Wesentlichen Gummimaterialien wie Naturkautschuk oder Chloroprenkautschuk verwendet werden. Daneben sind auch Wischblätter aus Silikonkautschuk oder Polyurethankautschuk bekannt.

Elastomere weisen gegenüber Materialien wie Glas oder Kunststoff hohe Gleitreibungskoeffizienten auf, so dass bei einer festgelegten vertikalen Auflagekraft eines Elastomerprofils in Form eines Scheibenwischblattes auf der Oberfläche einer Glasscheibe häufig ein Vielfaches der Auflagekraft für eine Horizontalbewegung aufgewendet werden muss. Wird der Scheibenwischer bei Nässe betrieben, stellt dies kein wesentliches Problem dar, da durch den Wasserfilm auf der Scheibe ein dünner Schmierfilm zwischen dem Scheibenwischblatt und der Scheibe gebildet wird, so dass sich eine hydrodynamische Schmierung einstellt. Probleme treten jedoch auf, wenn das Scheibenwischblatt ohne Wasser als Schmierfilm betrieben wird, beispielsweise im Sommer oder nach kurzen Regenschauern. Unter derartigen Bedingungen erfolgt ein schnelles Abtrocknen der Scheibe, wodurch der Reibungskoeffizient stark ansteigt, was zu Quietschen, Rattern oder sogar Stillstand des Scheibenwischers führen kann.

Um den Reibungskoeffizienten von Scheibenwischblättern gegenüber einer trockenen Glasscheibe herabzusetzen, wird bisher häufig eine Chlorierung oder Bromierung der Oberfläche des Scheibenwischblattes, d.h. eine Härtung, durchgeführt. Dies erfordert jedoch eine sehr exakte Prozessführung und ist unter Umweltschutzaspekten nicht unproblematisch. Darüber hinaus kann durch derartige Behandlungsverfahren die Wischqualität negativ beeinflusst werden.

Weiter wurde auch bereits vorgeschlagen, Elastomerprofile mit einer Beschichtung zu versehen, die insbesondere den Reibungskoeffizienten unter trockenen Bedingungen, d.h. den Trockenreibwert µ_{trocken}, herabsetzt. So wird in JP 55 015 873 eine Wischerlippe mit einem Silikongummi beschichtet, in das zur Reduzierung des Reibwertes als Trockenschmierstoff Molybdändisulfid eingebracht worden ist. Ein ähnlicher Ansatz wird in der DE 38 38 904 verfolgt, bei dem ein Polyurethanlack als Binder eingesetzt wird, in den Graphitpulver eingelagert ist.

Daneben ist aus DE 38 39 937 A1 ein einkomponentiger Polyurethanlack zur Beschichtung von Elastomeren bekannt, der reaktive Polysiloxane enthält. In EP 293 084 A1 ist eine Beschichtung beschrieben, die neben einem Polyurethan und einem Siloxan auch einen Zusatzstoff wie Ruß, Teflon, Graphit oder Talkum enthält. Mit diesem Material können Beschichtungen auf Elastomeren erzeugt werden, die einen niedrigen Reibungskoeffizienten unter trockenen Bedingungen aufweisen.

JP-A-8048800 beschreibt ein Harz-Beschichtungsmaterial für Kautschuk, das Silikonkautschuk und einen Trockenschmierstoff enthält, der Molybdänsulfid, Polytetrafluorethylen oder Graphit sein kann.

### Vorteile der Erfindung

Das erfindungsgemäße Wischblatt und die erfindungsgemäßen Verfahren zu dessen Herstellung haben gegenüber dem Stand der Technik den Vorteil, dass ein Wischblatt mit einer Beschichtung verfügbar ist, das einen besonders niedrigen Trockenreibwert aufweist und somit auf trockenen oder abtrocknenden Fahrzeugscheiben besonders günstige Eigenschaften zeigt.

Insbesondere wird durch die erfindungsgemäße Beschichtung die zur Bewegung des Wischarms über die Scheibe notwendige Kraft deutlich verringert, so dass auch der den Wischarm antreibende Elektromotor kleiner ausgelegt werden kann. Dies erlaubt auch den Einsatz preisgünstigerer Motoren und senkt den Energieverbrauch im Kraftfahrzeug. Die genannten Vorteile machen sich vor allem bei Fahrzeugtypen bemerkbar, bei denen zur Senkung des Luftwiderstandes große, flache Scheiben vorgesehen sind, die sehr lange Wischarme und Wischblätter erfordern.

Weiter ist vorteilhaft, dass durch die erfindungsgemäße Beschichtung auf Scheibenwischblättern eine Reduzierung von unangenehmen Geräuschen wie Quietschen oder Rattern auch unter sehr ungünstigen Betriebsbedingungen, wie beispielsweise bei abtrocknender oder trockener Scheibe, erreicht wird.

Ein weiterer Vorteil des erfindungsgemäßen Gleitlackes und der erfindungsgemäßen Verfahren liegt darin, dass eine damit erzeugte Beschichtung auf einem Scheibenwischblatt über einen längeren Zeitraum, insbesondere entsprechend der Zeit zwischen den normalen Inspektionsintervallen eines Kraftfahrzeugs, eine gleichbleibend gute Wischqualität gewährleistet.

Gegenüber der aus dem Stand der Technik bekannten Halogenieren von Elastomerprofilen haben die erfindungsgemäßen Verfahren den Vorteil, dass der aufgebrachte Gleitlack zuverlässig mit gleichbleibender Qualität und einfacher Verfahrenstechnik aufbringbar ist. Zudem ist die erfindungsgemäße Gleitlackbeschichtung deutlich umweltfreundlicher.

Vorteilhafte Weiterbildungen der Erfindung ergeben sich aus den in den Unteransprüchen genannten Maßnahmen.

So ist vorteilhaft, wenn der im Gleitlack vorgesehene Trockenschmierstoff eine Teilchengrösse von weniger als 30 µm aufweist. Dies gewährleistet ein weitgehend schlierenfreies Wischbild des Wischblatts.

Vorteilhaft ist weiter, dass der erfindungsgemäße Gleitlack als wässriger 1-Komponentenlack vorliegt, der keine Gefährdung für die Umwelt darstellt. Auf diese Weise werden die Prozesskosten reduziert und die Lagerung vereinfacht.

Daneben erfolgt das Aufbringen des Gleitlacks auf das Wischblatt vorteilhaft schon vor dessen Vulkanisation, so dass die bei der Vulkanisation zugeführte Energie gleichzeitig zum Aushärten und/oder thermischen Vernetzen genutzt werden kann und die Aushärtung des Gleitlacks zudem in sehr kurzer Zeit erfolgt. Weiter wird aufgrund der höheren Reaktivität des unvulkanisierten Materials in diesem Fall eine bessere Vernetzung des Gleitlacks mit dem den Untergrund bildenden Elastomer des Wischblatts erzielt.

Alternativ kann die Beschichtung jedoch auch nach der Vulkanisation erfolgen. Dies ermöglicht es, die Lackierung des Wischblatts außerhalb der eigentlichen Produktionslinie aufzubringen.

### Ausführungsbeispiele

Die Erfindung geht zunächst von einem von der Firma Henkel KGaA, Düsseldorf unter dem Markennamen Sipiol^{®} vertriebenen Lack zur Beschichtung von Elastomeren aus. Dieser Sipiol®-Lack, bei dem es sich um ein Polyurethansystem handelt, das reaktive Polysiloxane enthält, ist speziell für die Beschichtung von Gummiprofilen geeignet. Dabei vernetzten die Polysiloxane mit dem Polyurethansystem, so dass sie einen reibwertsenkenden, in das Polymer integrierten Bestandteil bilden. Er liegt, je nach Wahl des konkreten Sipiol^{®}-Lacks, zunächst als wässriger 1-Komponenten-Lack oder 2-Komponenten-Lack vor, und enthält als Zusatzstoffe zudem Ruß und geringe Mengen an Polytetrafluorethylen.

Im Einzelnen wurden zunächst übliche Elastomerprofile für Wischblätter mit einem Gleitlack auf Sipiol^{®}-Basis im Rahmen eines Vergleichsversuches beschichtet. Dazu wurde die von der Firma Henkel KGaA vertriebene Lackkomponente Sipiol® WL 2000-21, die als ruß- und polytetrafluorethylenhaltige Suspension vorliegt, im Verhältnis 100:6 mit dem ebenfalls von der Firma Henkel KGaA vertriebenen Härter auf Isocyanat-Basis WV20 nach Vorschrift zusammengemischt. Dieser Gleitlack wurde dann in Form einer Beschichtung auf die Elastomerprofile aufgetragen, die zuvor zur Haftverbesserung mit einem ebenfalls von der Firma Henkel KGaA unter dem Namen Cuvertin^{®} X8536 vertriebenen Primer vorbehandelt worden waren.

Nach dem Auftragen des Gleitlackes auf das Wischblatt wurde dieses 90 Minuten bei 90°C getrocknet, geschnitten, und anschließend der Trockenreibwert gegen Glas ermittelt. Diese Messung ergab noch relativ hohe, unbefriedigende Trockenreibwerte trocken von 1,5 bis 2,5. Weiter wurde zur Überprüfung der Haftfestigkeit der erzeugten Beschichtung das Wischblatt stark in Längsrichtung gedehnt. Der Gleitlack haftete dabei sehr gut auf dem Elastomerprofil, d.h. es konnte insbesondere keine Ablösung festgestellt werden.

Im Rahmen eines zweiten Vergleichsversuches wurde von dem ebenfalls von der Firma Henkel KGaA vertriebenen Lacksystem Sipiol® WL 1000-21 ausgegangen, das ebenfalls als ruß- und polytetrafluorethylenhaltige Suspension vorliegt, dem jedoch im Gegensatz zu dem System Sipiol® WL 2000-21 vor dem Beschichten kein Härter zugemischt werden muss, d.h. es handelt sich um ein 1-Komponentensystem. Ansonsten war das Vorgehen wie vorstehend. Mit dem härterfreien System Sipiol® WL 1000-21 wurden analoge Ergebnisse wie mit dem mit Härter versetzten System Sipiol® WL 2000-21 erzielt.

Als Ergebnis der Vergleichsversuche ist somit festzuhalten, dass diese bekannten Gleitlacke zwar keine ausreichend niedrigen Trockenreibwerte aufweisen, dass sie aber zum Erzeugen einer haftfesten Beschichtung auf Elastormerprofilen gut geeignet sind. Daher wird einer dieser Gleitlacke im Weiteren als Matrixsystem verwendet, dem weitere Trockenschmierstoffe zugesetzt werden, die eine deutliche Verminderung des Trockenreibwertes hervorrufen.

Dabei wurde gefunden, dass als Trockenschmierstoff besonders Graphit geeignet ist. Weiterhin ist die Zugabe von Polypropylenpulver oder von pulverförmigem Polytetrafluorethylen oder Molybdändisulfid von Vorteil. Weiterhin können auch zwei oder mehr der genannten Trockenschmierstoffe dem Gleitlack zugesetzt werden, eventuell auch in Kombination mit einem Polyamid- oder mit Polyethylenpulver oder einer Lösung eines Polyamids. Derartig modifizierte Gleitlacke führen zu sehr gut haftenden Beschichtungen auf Wischblättern mit besonders niedrigen Trockenreibwerten µ_{trocken} von unter 1.5, teilweise unter 1.0, die gleichzeitig abrieb- und witterungsbeständig sind. Zudem zeigen sie keinen Übertrag auf den Gegenkörper, d.h. das gewischte Glas. Dies ist speziell bei Windschutzscheiben von Bedeutung, um keinen unerwünschten Schmierfilm zu hinterlassen, der die Sicht beeinträchtigen könnte.

Konkret wurde im Rahmen eines Vergleichsbeispiels, ausgehend von dem erwähnten System Sipiol® WL 2000-21, dem der Härter WV20 auf Isocyanat-Basis zugesetzt wurde, oder alternativ ausgehend von dem härterfreien System Sipiol® WL 1000-21, auf 50 g härterfreies bzw. härterhaltiges Lacksystem 12 g Graphitpulver mit einer Teilchengröße von bevorzugt unter 30 µm zugesetzt. Die erhaltene Suspension wurde dann gut gerührt und in Form einer Beschichtung auf ein noch unvulkanisiertes, extrudiertes Elastomerprofil, das als Scheibenwischblatt geformt war, aufgetragen. Zuvor wurde das Elastomerprofil noch mit dem Primer Cuvertin^{®} X8536, der eine Lösung von chlorierten Polymeren in organischen Lösungsmitteln ist, zur Haftverbesserung vorbehandelt. Der Auftrag der Beschichtung auf dem Elastomerprofil erfolgte im erläuterten Beispiel durch Tauchen.

Nach dem Aufbringen des beschriebenen Gleitlackes mit einem Polyurethan, einem Siloxan, gegebenenfalls dem Härter und dem als Trockenschmierstoff zugesetzten Graphitpulver in Form einer dünnen Beschichtung auf das Elastomerprofil erfolgte zunächst eine Trocknung für 10 min bei 120°C. Danach wurden das beschichtete Elastomerprofil geschnitten und der Trockenreibwert µ_{trocken} gegen Glas analog dem Vergleichsversuch gemessen. Dabei wurden diesem gegenüber deutlich verminderte Trockenreibwerte gemessen, die zwischen µ_{trocken} = 0.65 und 1.0 lagen.

Durch die Verwendung von besonders feinem Graphitpulver mit Teilchengrößen von bevorzugt < 30 µm wird erreicht, dass bei Verwendung der beschichteten Elastomerprofile als Scheibenwischblätter keine negativen Auswirkungen auf das Wischbild bei nasser Scheibe auftreten.

Der Feststoffanteil des zugesetzten Graphitpulvers im Gleitlack kann bis zu 75 Gew.%, bezogen auf die fertige Gleitlacksuspension, erreichen. Bevorzugt liegt er unter 25 Gew.%, da bei höheren Anteilen die erhaltene Beschichtung teilweise nicht elastisch genug bleibt, d.h. es tritt eine verminderte Haftung der Beschichtung auf dem Elastomerprofil auf.

Alternativ eignen sich als pulverförmige Trockenschmierstoffe auch Polytetrafluorethylen, Molybdändisulfid oder Polypropylen. Als besonders vorteilhaft haben sich dabei Mischungen von Graphit mit einem weiteren Trockenschmierstoff herausgestellt. So eignet sich insbesondere Graphit in Kombination mit Polytetrafluorethylen, Polyamid , Polypropylen, Polyethylen oder Molybdändisulfid. Einige ausgewählte Rezepturen unter Angabe der resultierenden Trockenreibwerte sind in der folgenden Tabelle angegeben.

| Menge an Sipiol® WL 2000-21/ WL 1000-21 in Gramm | Trockenschmierstoff 1 | Menge in Gramm | Trockenschmierstoff 2 | Menge in Gramm | µ_{trocken} |
|---|---|---|---|---|---|
| 50 | Graphit | 12 | - | - | 0.65 - 1.0 |
| 50 | Graphit | 16 | PTFE | 12 | 0.8 - 1.0 |
| 50 | Graphit | 6 | PA | 6 | 1.0 - 1.2 |
| 50 | Graphit | 6 | PE | 12 | 0.8 - 1.0 |

Die beiden letzten Rezepturen in der Tabelle stellen Ausführungsbeispiele der Erfindung dar.

Als Polyethylenpulver eignet sich beispielsweise das unter dem Namen PE-UHMW Hostalen^{®} GUR 2126 von der Firma Ticona, Oberhausen, vertriebene Polyethylenpulver.

Als Polyamid werden bevorzugt N-methoxymethylierte Polyamide verwendet.

Bei den erwähnten Sipiol^{®}-Systemen handelt es sich um wässrige Polyurethan-Polysiloxan-Dispersionen, die auch weitere Additive enthalten. Weitere Details zu diesen an sich bekannten Produkten der Firma Henkel KGaA sind aus den entsprechenden Datenblättern zu entnehmen.

In diesem Zusammenhang sei weiter betont, dass es auch möglich ist, das Elastomerprofil eines Wischblatts zunächst mit einer unmodifizierten Sipiol^{®}-Lacksystem-Härter-Mischung oder dem härterfreien Sipiol^{®}-Lacksystem, d.h. ohne Trockenschmierstoff, zu beschichten, und auf diese Beschichtung dann vor einem nachfolgenden Aushärten den Trockenschmierstoff aufzutragen. Das Aufbringen des Trockenschmierstoffs kann dabei sowohl auf der bereits luftrockenen ersten Beschichtung oder auch auf der noch nassen ersten Beschichtung erfolgen. Dazu wird der Trockenschmierstoff auf die noch nasse Beschichtung beispielsweise aufgestreut oder aufgeblasen und anschließend die mit dem Pulver bestreute bzw. beblasene Beschichtung über 15 min bei 120°C getrocknet. Nachfolgende Messungen der Trockenreibwerte derart hergestellter, beschichteter Scheibenwischblätter ergaben Trockenreibwerte von 0.6 bis 0.9.

Diese Vorgehensweise hat den Vorteil, das die erste Beschichtung vor allem eine verbesserte Haftung auf dem Elastomerprofil des Wischblatts vermittelt, während der Auftrag des Trockenschmierstoffs in erster Linie die Trockenreibung des Wischblattes gegenüber Glas vermindert.

Zur weiteren Verbesserung der Wischeigenschaften des Wischblatts kann zusätzlich eine mechanische Nachbehandlung des beschichteten Wischblatts z.B. durch Bürsten vorgesehen sein.

Insgesamt wird auf diese Weise ein verringerter Abrieb und eine verlängerte Lebensdauer des hergestellten Scheibenwischblattes erzielt.

Hinsichtlich der Verfahren zum Aufbringen der erläuterten Beschichtungen auf die Elastomerprofile von Wischblätter und des Verfahrens zu deren Herstellung oder deren thermischer Nachbehandlung sei generell noch ausgeführt, dass die Elastomerprofile von Wischblättern in der Regel mit Hilfe eines Extruders erzeugt werden, wobei die Beschichtungen gemäß den erläuterten Ausführungsbeispielen bevorzugt unmittelbar nach der Extrusion durch Sprühen, Tauchen oder Bürsten aufgebracht werden. Nach dem Auftragen der Beschichtung erfolgt dann ein üblicher Vulkanisationsprozess der Elastomerprofile, beispielsweise in einem Salzbad oder in einem Ofen, bevor abschließend das beschichtete und vulkanisierte Elastomerprofil geschnitten wird.

Alternativ kann der Auftrag der Beschichtung auf das Elastomerprofil aber auch erst nach der Vulkanisation erfolgen, was jedoch eine weitere Temperaturbehandlung mit vorzugsweise geringerer Temperatur als bei der vorausgehenden Vulkanisation erfordert. Diese Temperaturbehandlung erfolgt dann beispielsweise hinter dem Salzbad bzw. hinter dem Ofen in einer weiteren Wärmezone.

Die Temperaturbehandlung bei der Vulkanisation oder in der nachgeschalteten Wärmezone bewirkt eine chemische Vernetzung innerhalb der Beschichtung und auch eine Verbindung bzw.

Vernetzung der Beschichtung mit dem darunter befindlichen Elastomerprofil.

Weiterhin ist es möglich, gezielt nur bestimmte Oberflächenpartien eines Wischblattes zu beschichten. So kann durch geeignete Prozessführung bei gezieltem Abdecken nicht zu beschichtender Bereiche des Wischblatts beispielsweise lediglich die in Kontakt mit der zu reinigenden Oberfläche stehende Wischleiste des Wischblattes beschichtet werden oder zusätzlich bzw. alternativ eine Führungsnut des Wischblattes, mit denen das Wischblatt in eine entsprechende Wischblatthalterung eingeführt werden kann.

## Patentansprüche

1. Wischblatt, insbesondere für Scheibenwischer, das zumindestens bereichsweise mit einer reibungsvermindernden Beschichtung versehen ist, die durch einen Gleitlack gebildet ist, der ein Polyurethan und ein Siloxan aufweist, wobei die Beschichtung als Trockenschmierstoff Graphit, Polytetrafluorethylen, Polypropylen und/oder Molybdändisulfid enthält, **dadurch gekennzeichnet, dass** die Beschichtung zusätzlich Polyethylen und/oder ein Polyamid enthält.

2. Wischblatt nach Anspruch 1, **dadurch gekennzeichnet, dass** der Trockenschmierstoff eine Teilchengröße von weniger als 30 µm aufweist.

3. Wischblatt nach einem der Ansprüche 1 oder 2, **dadurch gekennzeichnet, dass** die Beschichtung mindestens 6 Gew.% an Trockenschmierstoff enthält.

4. Wischblatt nach einem der vorhergehenden Ansprüche, **dadurch gekennzeichnet, dass** der Gleitlack als Einkomponentensystem auf das Wischblatt aufbringbar ist.

5. Verfahren zum Beschichten eines Wischblatts nach einem der Ansprüche 1 bis 4, **dadurch gekennzeichnet, dass** das Wischblatt zunächst einer Plasmavorbehandlung unterzogen wird und danach ein Gleitlack aufgebracht und ausgehärtet wird.

6. Verfahren zum Beschichten eines Wischblatts nach einem der Ansprüche 1 bis 4, **dadurch gekennzeichnet, dass** auf ein Wischblatt ein Lack oder Gleitlack aufgebracht wird und danach auf den Lack oder Gleitlack ein Trockenschmierstoff in trockener Form oder in alkoholischer oder wässriger Lösung aufgetragen wird.

7. Verfahren nach Anspruch 6, **dadurch gekennzeichnet, dass** der Lack oder Gleitlack vor dem Aufbringen des Trockenschmierstoffs einer trocknenden und/oder zumindest den Lack oder Gleitlack thermisch vernetzenden Temperaturbehandlung unterzogen wird.

8. Verfahren nach Anspruch 6, **dadurch gekennzeichnet, dass** das lackierte Wischblatt nach dem Aufbringen des Trockenschmierstoffes einer trocknenden und/oder zumindest den Lack oder Gleitlack thermisch vernetzenden Temperaturbehandlung unterzogen wird.

9. Verfahren nach einem der Ansprüche 6 bis 8 **dadurch gekennzeichnet, dass** der Lack oder Gleitlack sowie der Trockenschmierstoff auf das Wischblatt unmittelbar nach dessen Extrusion aufgebracht wird, und dass danach das mit Lack oder Gleitlack sowie Trockenschmierstoff versehene Wischblatt vulkanisiert wird.

10. Verfahren nach einem der Ansprüche 6 bis 8, **dadurch gekennzeichnet, dass** der Lack oder Gleitlack sowie der Trockenschmierstoff auf ein vulkanisiertes Elastomerprofil aufgebracht wird.

## Claims

1. Wiper blade, in particular for a windscreen wiper, which is provided at least in regions with a friction-reducing coating which is formed by an antifriction lacquer which comprises a polyurethane and a siloxane, the coating containing graphite, polytetrafluoroethylene, polypropylene and/or molybdenum disulphide as a dry-film lubricant, **characterized in that** the coating additionally contains polyethylene and/or a polyamide.

2. Wiper blade according to Claim 1, **characterized in that** the dry-film lubricant has a particle size of less than 30 µm.

3. Wiper blade according to either of Claims 1 and 2, **characterized in that** the coating contains at least 6% by weight of dry-film lubricant.

4. Wiper blade according to any of the preceding claims, **characterized in that** the antifriction lacquer can be applied as a one-component system to the wiper blade.

5. Method for coating a wiper blade according to any of Claims 1 to 4, **characterized in that** the wiper blade is first subjected to a plasma pretreatment and then an antifriction lacquer is applied and cured.

6. Method for coating a wiper blade according to any of Claims 1 to 4, **characterized in that** a lacquer or antifriction lacquer is applied to a wiper blade and a dry-film lubricant in dry form or in alcoholic or in aqueous solution is then applied to the lacquer or antifriction lacquer.

7. Method according to Claim 6, **characterized in that**, before the application of the dry-film lubricant, the lacquer or antifriction lacquer is subjected to a thermal treatment which effects drying and/or thermal crosslinking of at least the lacquer or antifriction lacquer.

8. Method according to Claim 6, **characterized in that**, after the application of the dry-film lubricant, the lacquer-coated wiper blade is subjected to a thermal treatment which effects drying and/or thermal crosslinking of at least the lacquer or antifriction lacquer.

9. Method according to any of Claims 6 to 8, **characterized in that** the lacquer or antifriction lacquer and the dry-film lubricant are applied to the wiper blade immediately after the extrusion thereof, and **in that** the wiper blade provided with lacquer or antifriction lacquer and dry-film lubricant is then vulcanized.

10. Method according to any of Claims 6 to 8, **characterized in that** the lacquer or antifriction lacquer and the dry-film lubricant are applied to a vulcanized elastomer profile.

## Revendications

1. Raclette notamment pour un essuie-glace munie au moins par zone d'un revêtement réduisant le frottement, ce revêtement étant constitué par un vernis de glissement contenant un polyuréthane et un siloxane, le revêtement contenant comme lubrifiant sec du graphite, du polytétra-fluoréthylène, du polypropylène et/ou du disulfure de molybdène,
**caractérisée en ce que**
le revêtement contient en outre du polyéthylène et/ ou un polyamide.

2. Raclette selon la revendication 1,
**caractérisée en ce que**
le lubrifiant sec a une dimension de particules inférieure à 30 µm.

3. Raclette selon la revendication 1 ou 2,
**caractérisée en ce que**
le revêtement contient au moins 6 % en poids de lubrifiant sec.

4. Raclette selon l'une des revendications précédentes,
**caractérisée en ce que**
le vernis lisse est appliqué sur la raclette d'essuie-glace sous la forme d'un système à un seul composant.

5. Raclette selon l'une des revendications 1 à 4,
**caractérisée en ce que**
la raclette est d'abord soumise à un traitement avec du plasma puis on applique un vernis de glissement et on fait durcir.

6. Raclette selon l'une des revendications 1 à 4,
**caractérisée en ce qu'**
on applique un vernis ou un vernis de glissement sur la raclette et ensuite, on applique sur le vernis ou le vernis lisse, un lubrifiant sec à l'état sec ou sous la forme d'une solution alcoolique ou aqueuse.

7. Raclette selon la revendication 6,
**caractérisée en ce qu'**
avant d'appliquer le lubrifiant sec, on soumet le vernis ou le vernis de glissement à un traitement thermique de séchage et/ou au moins produisant la réticulation thermique du vernis ou du vernis lisse.

8. Raclette selon la revendication 6,
**caractérisée en ce qu'**
après application du lubrifiant sec, on soumet la raclette d'essuie-glace, vernie à un traitement thermique de séchage et/ou au moins produisant la réticulation thermique du vernis ou du vernis lisse.

9. Raclette selon l'une des revendications 6 à 8,
**caractérisée en ce qu'**
on applique le vernis ou le vernis lisse ainsi que le lubrifiant sec sur la raclette d'essuie-glace directement après son extrusion et ensuite on vulcanise la raclette d'essuie-glace munie du vernis ou du vernis lisse et du lubrifiant sec.

10. Raclette selon l'une des revendications 6 à 8,
**caractérisée en ce qu'**
on applique le vernis ou le vernis lisse ainsi que le lubrifiant sec sur un profil en élastomère, vulcanisé.
